# FASCICULE DE BREVET EUROPEEN

(11) **EP 4 476 161 B1**
(45) Date de publication et mention de la délivrance du brevet: **08.04.2026**
(21) Numéro de dépôt: 23707142.8
(22) Date de dépôt: 07.02.2023
(51) Int. Cl.: B66D 5/14, B66D 5/26, B66D 5/30

(54) **FREIN À DISQUE POUR ENGIN DE LEVAGE, COMBINANT UN FREIN POSITIF ET UN FREIN NÉGATIF**
SCHEIBENBREMSE FÜR EINE HUBMASCHINE MIT EINER POSITIVBREMSE UND EINER NEGATIVBREMSE
DISC BRAKE FOR A LIFTING MACHINE COMBINING A POSITIVE BRAKE AND A NEGATIVE BRAKE

(30) Priorité: 07.02.2022 FR 2201039
(43) Date de publication de la demande: 18.12.2024
(73) Titulaire: STROMAG FRANCE SAS, 18150 La Guerche-sur-l'Aubois (FR)
(72) Inventeur: BABISE, David, 58200 POUGNY (FR)
(74) Mandataire: Santarelli
(86) Numéro de dépôt international: PCT/FR2023/050164
(87) Numéro de publication internationale: WO 2023/148463

(56) Documents cités:
- CN-A- 105 439 026
- DE-A1- 3 509 042
- FR-A2- 2 092 932
- US-A- 3 647 030

## Description

### DOMAINE TECHNIQUE

La présente demande concerne un frein à disque particulièrement adapté pour freiner des charges importantes (par exemple supérieures à plusieurs tonnes et pouvant aller jusqu'à 50t), tel qu'un frein destiné à équiper un ascenseur, une télécabine ou un engin de levage du type grue, pont roulant, etc.

### ETAT DE LA TECHNIQUE

Un ascenseur ou engin de levage comprend d'une part une ligne grande vitesse comprenant un moteur (généralement à variateur) et un arbre grande vitesse entraîné en rotation par le moteur par l'intermédiaire d'un système d'accouplement, et d'autre part une ligne petite vitesse comprenant un arbre petite vitesse et un tambour sur lequel s'enroule les câbles de suspension de la charge (cabine d'ascenseur ou charge à lever), l'arbre petite vitesse étant entraîné en rotation par l'arbre de la ligne grande vitesse auquel il est relié par l'intermédiaire d'un réducteur.

Un ascenseur ou un engin de levage nécessite d'être équipé de freins pour plusieurs fonctions, notamment : ralentir puis arrêter l'ascenseur ou l'engin de levage à l'approche d'une position d'arrêt (frein de service), bloquer l'ascenseur à chaque fois que les portes s'ouvrent ou bloquer l'engin de levage lorsqu'il est à sa position d'arrêt c'est-à-dire lorsque la charge est à la hauteur souhaitée (frein de parking). Les normes imposent que l'ascenseur ou engin de levage soit de plus équipé d'un frein de sécurité, encore appelé frein d'urgence ou *« failsafe brake »* en anglais, pour ralentir, arrêter et bloquer l'ascenseur ou l'engin de levage en cas de panne électrique ou, de façon plus générale, en cas d'urgence quelle qu'en soit la nature.

Les freins de service (grande vitesse et petit couple) sont en général associés à la ligne grande vitesse, tandis que les freins de sécurité (petite vitesse et gros couple) sont montés sur la ligne petite vitesse.

Un frein de sécurité est notamment configuré pour se déclencher lorsqu'il n'est plus alimenté en électricité (en cas de panne électrique) : on parle de frein à manque ou de frein négatif.

Les freins à disques se sont imposés depuis les années 1960 pour cet usage notamment car leur échauffement ne pose pas ou peu de problèmes. En effet, sous l'effet de la chaleur, les disques se dilatent radialement et non dans la direction de leur épaisseur de sorte que le couple de freinage reste maîtrisé.

Un frein de sécurité à disque comprend généralement :
- un disque solidaire de la ligne à freiner, de part et d'autre duquel s'étendent les deux plateaux d'une pince apte à venir serrer le disque, lesquels plateaux sont munis de plaquettes de friction,
- pour chaque plateau ou pour l'un des deux plateaux seulement, un ressort à rondelles configuré pour imposer un effort de compression sur ledit plateau de façon à pousser et maintenir sous pression les plateaux contre le disque et ainsi fermer et serrer la pince,
- un actionneur hydraulique ou électromagnétique ou électromécanique configuré pour, lorsqu'il est sous-tension, comprimer le ressort à rondelles de façon à éloigner ledit plateau du disque pour ouvrir la pince et libérer le disque en rotation.

S'agissant des ascenseurs, les freins de service et de parking doivent être qualifiés pour 10 millions de manœuvres tandis que le frein de sécurité doit être qualifié pour 200 000 utilisations. De même, les constructeurs d'engins de levage exigent souvent que les freins de parking et les freins de sécurité qu'ils intègrent dans leurs engins soient garantis, respectivement, pour 4 millions et 200 000 utilisations, bien qu'aucune norme ne l'impose à ce jour.

Certains constructeurs d'ascenseurs ou autres engins de levage utilisent un seul frein pour remplir les fonctions de service et de parking. Ce frein étant sollicité plus fréquemment et/ou sur des temps plus longs, ses plaquettes de friction s'usent plus vite, ce qui augmente les coûts de maintenance. Pour les mêmes raisons, la durée de vie du frein diminue, ce qui oblige à le remplacer plus souvent. Tout ceci génère des périodes d'immobilisation de l'ascenseur ou engin de levage désagréables pour les usagers (dans le cas des ascenseurs domestiques) ou coûteuses pour l'entreprise (dans le cas des engins de levage ou ascenseurs hors normes utilisés dans l'industrie).

D'autres constructeurs d'ascenseurs ou autres engins de levage utilisent le frein de sécurité comme frein de parking, ce qui qui oblige à surdimensionner le frein de sécurité pour que celui-ci soit qualifié pour 4 ou 10 millions d'utilisations au lieu de 200 000, c'est-à-dire à multiplier le nombre de rondelles du frein de sécurité pour compenser la casse éventuelle de rondelles pouvant survenir au cours des multiples utilisations du frein. Ceci se traduit par une augmentation de l'encombrement du frein et de ses coûts de fabrication.

Les freins à disque sont aussi utilisés dans le domaine automobile. US 3,647,030 divulgue un frein pour véhicule automobile qui présente la particularité de combiner un actionneur négatif à rondelles tel que précédemment décrit avec un actionneur positif. US 3,647,030 divulgue donc le préambule de la revendication 1.

L'actionneur positif est formé par un premier piston monté coulissant dans un boîtier et une première chambre pouvant recevoir un liquide sous pression, l'augmentation de la pression du liquide dans ladite première chambre entraînant le déplacement du piston dans le sens du serrage du frein. Le rappel de ce premier piston (pour l'ouverture du frein lorsque la pédale de frein est lâchée) est assuré par un joint à déformation élastique, logé dans une gorge entre la face périphérique extérieure du piston et le boîtier, comme l'explique le brevet US 3,377,076 incorporé par référence dans US 3,647,030.

L'actionneur négatif est formé par un second piston et une seconde chambre pouvant recevoir un liquide sous pression, une augmentation de la pression du liquide dans la seconde chambre entraînant l'ouverture du frein. Le second piston présente une collerette sur laquelle s'appuie un empilement de rondelles ressorts. Lorsqu'une panne de pression de liquide survient dans le circuit, la pression dans la seconde chambre chute et l'empilement de rondelles ressorts peut se détendre et pousser le second piston, qui entraîne avec lui le premier piston, provoquant la fermeture du frein. Le maintien d'une pression élevée dans la seconde chambre permet de neutraliser le frein formé par le second piston.

Un tel frein présente l'avantage de combiner dans un même dispositif un actionneur positif servant de frein de service et un actionneur négatif servant de frein de secours. Il peut être qualifié de frein hybride du fait de cette combinaison. Mais il présente les inconvénients suivants.

En premier lieu, le débattement (ouverture) du frein de US 3,647,030 reste limité à quelques millimètres. Ce frein ne peut donc pas être utilisé avec de grands disques, ce qui le rend inadapté aux engins de levage.

En effet, les engins de levage nécessitent des disques de freinage de grand diamètre (pouvant aller jusqu'à plusieurs mètres), contrairement aux véhicules automobiles dont les disques ont un diamètre de l'ordre de 250mm. En raison de leur grand diamètre, les disques des engins de levage peuvent présenter un voile de plusieurs millimètres, incompatible avec l'utilisation d'un frein ayant un débattement du même ordre (il importe que les garnitures du frein ne frottent pas le disque lorsque le frein est en position ouverte ; en outre, en position fermée, la force de freinage appliquée par les garnitures sur le disque doit pouvoir être maîtrisée et ne pas dépendre de la position angulaire du disque).

Par ailleurs, compte tenu de la conception du frein de US 3,647,030, en cas de panne de son actionneur positif, telle qu'un problème de fuite du liquide de freinage, il est nécessaire de déposer le frein et de le démonter entièrement pour pouvoir le réparer. S'agissant d'un frein de véhicule automobile, ce n'est pas un problème en soi. Mais pour un frein d'engin de levage, dont le poids et l'encombrement sont sans commune mesure avec ceux des freins de véhicule automobile, il serait appréciable de pouvoir intervenir in situ et réparer le frein sans avoir à le déposer.

FR2092932 divulgue un frein hybride pour véhicule automobile qui présente des inconvénients similaires à celui de US 3,647,030, notamment en termes de débattement, et est par conséquent inadapté aux engins de levage.

Il en va de même de DE3509042, qui divulgue un autre frein hybride.

### PRESENTATION DE L'INVENTION

Dans toute la suite, l'expression « *engin de levage* » englobe aussi bien les engins de levage industriels tels que grues, ponts de levage, etc. que les ascenseurs, à usage industriel ou domestique.

L'invention vise à pallier au moins l'un des inconvénients précités en proposant un frein adapté aux engins de levage, pouvant être utilisé en même temps comme frein de parking et frein d'urgence, voire également comme frein de service si les normes de levage évoluent en ce sens, sans sacrifier à la sécurité, ni à la compacité du frein, ni à sa simplicité de conception, et sans augmenter ses coûts de fabrication et de maintenance.

L'invention vise notamment à proposer un frein hybride ayant un grand débattement pour pouvoir être utilisé avec des disques de grands diamètres, par exemple des disques de un à plusieurs mètres de diamètre.

Un autre objectif de l'invention, dans une version préférée de celle-ci, est de pouvoir transformer, facilement et à moindre coût, un frein de sécurité existant en un frein hybride. Un autre objectif de l'invention, dans une version préférée de celle-ci, est de proposer un frein hybride pour engin de levage dont l'entretien est facilité.

Pour atteindre les objectifs susmentionnés, l'invention propose un frein hybride pour engin de levage, destiné à coopérer avec un disque de l'engin de levage s'étendant dans un plan orthogonal à une direction axiale, le frein hybride comprenant :
- deux plateaux s'étendant parallèlement au disque de part et d'autre de celui-ci, les deux plateaux formant une pince pouvant être actionnée entre une position de frein ouvert dans laquelle les plateaux sont à distance du disque et une position de frein fermé dans laquelle les plateaux pincent le disque,
- un corps rigide comprenant une partie supérieure tubulaire, dite demi-étrier supérieur, située d'un côté du disque, l'un des plateaux, dit plateau supérieur, étant porté par un sabot monté coulissant selon la direction axiale dans un évidement central traversant du demi-étrier supérieur,
- un empilage de rondelles ressorts agencé dans l'évidement central du demi-étrier supérieur autour d'un axe central parallèle à la direction axiale, l'empilage de rondelles ressorts pouvant être comprimé au-delà d'un niveau, dit compression de freinage d'urgence, dans lequel ledit empilage exerce une force sur le sabot correspondant à un effort de serrage d'urgence souhaité sur le disque,
- un actionneur négatif, comprenant un piston négatif mû par une première source d'énergie, lequel piston négatif présente une face sur laquelle repose une extrémité inférieure de l'empilage de rondelles ressorts, le piston négatif étant monté coulissant selon la direction axiale dans l'évidement central du demi-étrier supérieur entre une position haute de frein ouvert dans laquelle le piston négatif comprime l'empilage de rondelles ressorts au-delà de la compression de freinage d'urgence, et une position basse de frein fermé dans laquelle le frein est fermé et dans laquelle le piston négatif maintient l'empilage de rondelles ressorts à la compression de freinage d'urgence d'un côté et est en appui direct ou indirect sur le sabot de l'autre côté, le piston négatif étant placé dans sa position haute de frein ouvert lorsque la première source d'énergie est activée et dans sa position basse de frein fermé lorsque ladite première source d'énergie est inactive (soit parce qu'il y a une panne électrique soit parce que la première source n'est pas activée ou est volontairement désactivée),
- un actionneur positif comprenant un piston positif mû par une seconde source d'énergie, , le piston positif étant monté coulissant selon la direction axiale entre une position haute de frein ouvert, (dans laquelle le frein est ouvert) et une position basse de frein fermé (dans laquelle le frein est fermé et plus ou moins serré), le piston positif étant placé dans sa position haute de frein ouvert lorsque la seconde source d'énergie est inactive et pouvant être placé dans sa position basse de frein fermé lorsque la seconde source d'énergie est activée.

Le frein hybride selon l'invention est caractérisé en ce qu'il comprend un ressort de rappel du piston positif, configuré pour remonter le piston positif dans sa position haute de frein ouvert.

En cas d'urgence, l'actionneur négatif est désactivé et le frein est fermé avec un effort de serrage d'urgence souhaité, qui est fixé par la structure de l'empilage de rondelles ressorts.

L'actionneur positif peut être utilisé en tant que frein de parking, voire également en tant que frein de service sous réserve de l'évolution des normes en ce sens, et il doit, à ce titre, être dimensionné de façon à être qualifié pour environ un million de cycles d'utilisation (il est de préférence qualifié pour plusieurs millions, par exemple pour au moins 10 millions, de cycles d'utilisation). L'actionneur positif peut aussi être utilisé pour un maintien statique de la charge de courte durée (frein de parking de courte durée, lorsque l'installation est sous tension, l'actionneur négatif étant toujours en veille pour assurer la sécurité de la charge).

Compte tenu de sa conception, le frein négatif est automatiquement sollicité en cas de panne électrique (seconde source d'énergie indisponible et actionneur négatif inactif). Le frein négatif peut par ailleurs être utilisé de façon active pour tout freinage dynamique d'urgence (en cas de défaut quelconque) et pour un maintien statique de la charge de longue durée (frein de parking de longue durée, par exemple lorsque l'installation est placée hors service). L'empilage de rondelles ressorts, qui constitue la réserve d'énergie du frein négatif pour le freinage d'urgence, doit donc être dimensionné de façon à être qualifié pour 200 000 cycles d'utilisation. Le frein négatif n'étant pas utilisé comme frein de service, il n'est pas nécessaire que l'empilage de rondelles ressorts soit dimensionné pour plusieurs millions de cycles, ce qui limite son encombrement et son coût.

Grâce au ressort de rappel, le piston positif peut être déplacé sur une course bien plus grande que le piston positif de US 3,647,030 par exemple. En d'autres termes, le frein peut présenter une ouverture bien supérieure, ce qui rend son utilisation compatible avec un disque de grand diamètre dans un engin de levage. Dans une version préférée :
- le piston négatif comprend une cavité supérieure cylindrique recevant une partie inférieure de l'empilage de rondelles ressorts, le piston négatif comprenant par ailleurs une extrémité inférieure configurée pour s'appuyer directement ou indirectement sur le sabot lorsque le piston négatif est en position basse, de sorte que la pression exercée par l'empilage de rondelles ressort sur le fond de la cavité du piston est transmise au sabot (lorsque le piston négatif est en position basse),
- le piston positif comprend un arbre s'étendant selon l'axe central à travers l'empilage de rondelles ressorts, lequel arbre présente une extrémité inférieure configurée pour s'accoupler au sabot et une extrémité supérieure qui fait saillie hors du demi-étrier supérieur quelle que soit la position du piston positif.

On a donc une configuration qui, en quelque sorte, est « inversée » par rapport à celle proposée par US 3,647,030 (où l'arbre central correspond au piston négatif et non au piston positif). Cette configuration présente deux avantages principaux.

En premier lieu, un tel frein peut être obtenu à partir d'un frein de sécurité existant, qui comporte uniquement un actionneur négatif formé par un piston négatif s'appuyant directement ou indirectement sur un sabot, et un empilement de rondelles ressorts reposant sur une face dudit piston négatif. Un actionneur positif peut aisément être formé à partir d'un piston en forme d'arbre (ayant une extrémité inférieure apte à s'accoupler au sabot) et d'un couvercle rapporté au-dessus du demi-étrier. Un trou central est ménagé dans le fond du piston négatif si nécessaire et l'arbre peut aisément être inséré dans le trou central des rondelles ressorts et dudit piston négatif. Le couvercle est par ailleurs aménagé pour recevoir les moyens pour actionner l'arbre (piston positif) selon l'axe central.

En second lieu, ce frein est avantageux en ce que son actionneur positif, qui, en tant que frein de service, est l'actionneur le plus utilisé et donc le plus susceptible de tomber en panne, est directement accessible depuis une face extérieure supérieure du demi-étrier, sans qu'il ne soit nécessaire de démonter une autre partie importante du frein, telle que l'actionneur négatif par exemple, et sans qu'il ne soit nécessaire de déposer le frein hybride. La maintenance et les réparations éventuelles de l'actionneur positif en sont facilitées. Elles peuvent s'effectuer in situ, sans déposer le frein, ce qui est appréciable lorsque celui-ci présente des dimensions et/ou un poids importants. En outre, la source d'énergie et les moyens d'activation du piston positif peuvent être agencés en partie supérieure du demi-étrier ou au-dessus de celui-ci (par exemple dans un couvercle qui vient coiffer le demi-étrier), de sorte qu'ils sont eux aussi aisément accessibles. Les opérations de maintenance et de réparation en sont facilitées, et les frais de maintenance réduits.

Selon une caractéristique possible de l'invention, la première source d'énergie (source d'énergie de l'actionneur négatif) est hydraulique, le piston négatif présentant un épaulement externe qui est orienté vers le disque et qui délimite, dans l'évidement central du demi-étrier, une chambre dite chambre hydraulique négative. Le remplissage de ladite chambre hydraulique négative par le fluide de la première source d'énergie exerce donc une pression sur ledit épaulement en direction opposée au disque, ce qui entraîne le déplacement du piston négatif en direction opposée au disque.

En variante, la première source d'énergie peut être électromagnétique ou électromécanique.

Selon une caractéristique possible de l'invention, la seconde source d'énergie (source d'énergie de l'actionneur positif) est hydraulique ou électromécanique ou électromagnétique.

De façon classique, chaque plateau est muni d'une ou plusieurs plaquettes de friction. Selon une caractéristique possible de l'invention, le frein comprend un dispositif de rattrapage d'usure entre l'empilage de rondelles ressorts et le sabot pour compenser l'usure des plaquettes de friction.

Avantageusement et selon l'invention, ce dispositif de rattrapage d'usure comprend :
- un filetage dit filetage de rattrapage, ménagé sur l'arbre de l'actionneur positif entre l'extrémité inférieure de l'empilage de rondelles ressorts et l'extrémité inférieure de l'arbre,
- des coquilles dites coquilles de rattrapage, agencées autour du filetage de rattrapage, chaque coquille de rattrapage présentant une face taraudée complémentaire du filetage de rattrapage,
- pour chaque coquille de rattrapage, un logement ménagé dans le piston négatif et dans lequel est logée ladite coquille, le logement ayant une dimension axiale supérieure à un encombrement axial de la coquille de rattrapage augmenté d'au moins un pas de filetage de rattrapage de sorte que la coquille de rattrapage peut se déplacer axialement dans ce logement sur une distance axiale d'au moins un pas de filetage, le logement ayant aussi radialement une profondeur suffisante pour que la coquille puisse se déplacer radialement sur une distance radiale correspondant au moins à la profondeur du pas de filetage de rattrapage de façon à ce que le taraudage de la coquille puisse se désengager du filetage de rattrapage,
- un anneau élastique entourant les coquilles en exerçant sur elles une pression radiale centripète tendant à maintenir les coquilles de rattrapage plaquées contre le filetage de rattrapage. Par exemple, l'anneau élastique s'appuie sur une face extérieure périphérique des coquilles opposée à leur face taraudée.

Selon une caractéristique possible de l'invention, les coquilles de rattrapage sont au nombre de trois, uniformément réparties autour du filetage de rattrapage c'est-à-dire agencées sur des rayons formant entre eux des angles de 120°.

Selon une caractéristique possible, le dispositif de rattrapage d'usure comprend de plus un actionneur configuré pour entraîner le piston positif en rotation et des moyens de pilotage dudit actionneur.

Le rattrapage d'usure peut ainsi se faire non seulement de façon automatique par saut de pas comme expliqué plus loin dans la description détaillée en référence aux figures annexées, mais aussi de façon pilotée par mise en rotation du piston positif (et donc du filetage de rattrapage) par l'actionneur dédié susmentionné.

Le frein hybride selon l'invention peut être un frein coulissant ou un frein symétrique.

Si le frein hybride selon l'invention est un frein coulissant :
- outre le demi-étrier supérieur, le corps rigide du frein comprend une partie inférieure, dite contre-étrier, située de l'autre côté du disque, l'autre plateau, dit plateau inférieur, étant situé sur ce contre-étrier et étant fixe relativement à celui-ci,
- le frein est dépourvu d'actionneur pour le freinage du côté du contre-étrier ; il comprend donc de préférence uniquement l'actionneur négatif et l'actionneur positif précédemment définis, qui sont agencés dans le demi-étrier supérieur,
- le frein comprend une colonne sur laquelle le corps rigide (demi-étrier + contre-étrier) est monté coulissant selon la direction axiale.

Si le frein hybride selon l'invention est un frein symétrique :
- outre le demi-étrier supérieur, le corps rigide du frein comprend un demi-étrier inférieur, situé de l'autre côté du disque,
- à l'instar du plateau supérieur, le plateau inférieur est porté par un sabot inférieur monté coulissant selon la direction axiale dans un évidement central du demi-étrier inférieur,
- le frein comprend un second actionneur positif et un second actionneur négatif agencés dans le demi-étrier inférieur et configurés pour mouvoir le sabot inférieur. Les seconds actionneurs négatif et positif peuvent être identiques, respectivement, aux actionneurs négatif et positif du demi-étrier supérieur, mais agencés de façon symétrique (par rapport au plan de freinage représenté par le disque) dans le demi-étrier inférieur. En bref, l'ensemble du frein peut être symétrique par rapport au disque.

L'invention s'étend à un système de freinage comprenant un frein hybride tel que précédemment défini et un contrôleur à microprocesseur(s) auquel sont reliés les actionneurs positif et négatif dudit frein hybride, le contrôleur étant configuré pour utiliser l'actionneur positif pour tout freinage dynamique de service et pour tout maintien statique lorsque l'engin de levage est en service, sous tension et en absence de défaut (maintien statique « de courte durée »), et pour utiliser l'actionneur négatif pour tout freinage dynamique d'urgence et pour tout maintien statique ( « de longue durée ») lorsque l'engin de levage est placé hors service (c'est-à-dire n'est plus sous tension), l'actionneur négatif étant aussi, de par sa conception, automatiquement déclenché sans action du contrôleur pour tout freinage dynamique d'urgence en cas de panne électrique.

L'invention s'étend à un engin de levage caractérisé en ce qu'il est équipé d'un frein hybride tel que précédemment défini. Dans la phrase qui précède, l'expression « un frein hybride » ne doit pas être comprise comme signifiant « un et un seul » frein hybride mais comme signifiant « au moins un » frein hybride, c'est-à-dire un ou plusieurs freins hybrides.

### BREVE DESCRIPTION DES DESSINS

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
[Fig. 1] la figure 1 est une coupe par un plan axial d'un mode de réalisation d'un frein hybride selon l'invention ;
[Fig. 2] la figure 2 est une représentation symbolique du frein hybride de la figure 1 ;
[Fig. 3] la figure 3 est une représentation symbolique d'un dispositif de rattrapage d'usure pouvant équiper un frein hybride selon l'invention, montrant le frein dans le cas de plaquettes de friction neuves et avec le piston positif en position haute de frein ouvert, le piston négatif étant en position haute ;
[Fig. 4] la figure 4 est une représentation symbolique du dispositif de rattrapage d'usure de la fig. 3 dans le cas de plaquettes de friction neuves et avec le piston positif en position basse de frein fermé, le piston négatif étant en position haute ;
[Fig. 5] la figure 5 est une représentation symbolique du dispositif de rattrapage d'usure des fig. 3 à 5 dans le cas de plaquettes de friction usées, simulant la fermeture du frein positif, c'est-à-dire la descente du piston positif en direction du disque à partir de sa position haute, le piston négatif étant inutilisé et donc figé en position haute ;
[Fig. 6] la figure 6 est une représentation symbolique du dispositif de rattrapage d'usure de la fig. 5 (avec des plaquettes de friction usées), simulant l'ouverture du frein positif, c'est-à-dire la remontée du piston positif en direction opposée au disque, après un freinage consécutif à la situation de la fig. 5, le piston négatif étant toujours figé en position haute.

### DESCRIPTION DETAILLEE

Les éléments identiques représentés sur les figures précitées sont identifiés par des références numériques identiques.

Dans toute la description, le frein est défini et décrit dans la position dans laquelle il apparait sur les figures annexées. Les termes « haut », « bas », « supérieur », « inférieur », « au-dessus », « au-dessous », « montée », « descente », etc., font référence à cette position et n'ont pas de rapport avec la direction de la gravité, le frein pouvant fonctionner dans n'importe quelle position. Ainsi par exemple, le frein étant décrit dans une position dans laquelle ses actionneurs sont situés au-dessus du disque, l'expression « le piston descend » est employée pour signifier plus généralement que le piston en question se déplace en direction du disque (ce qui ne signifie pas qu'il suit nécessairement la direction de la gravité), tandis que l'expression « le piston monte » signifie que le piston s'éloigne du disque.

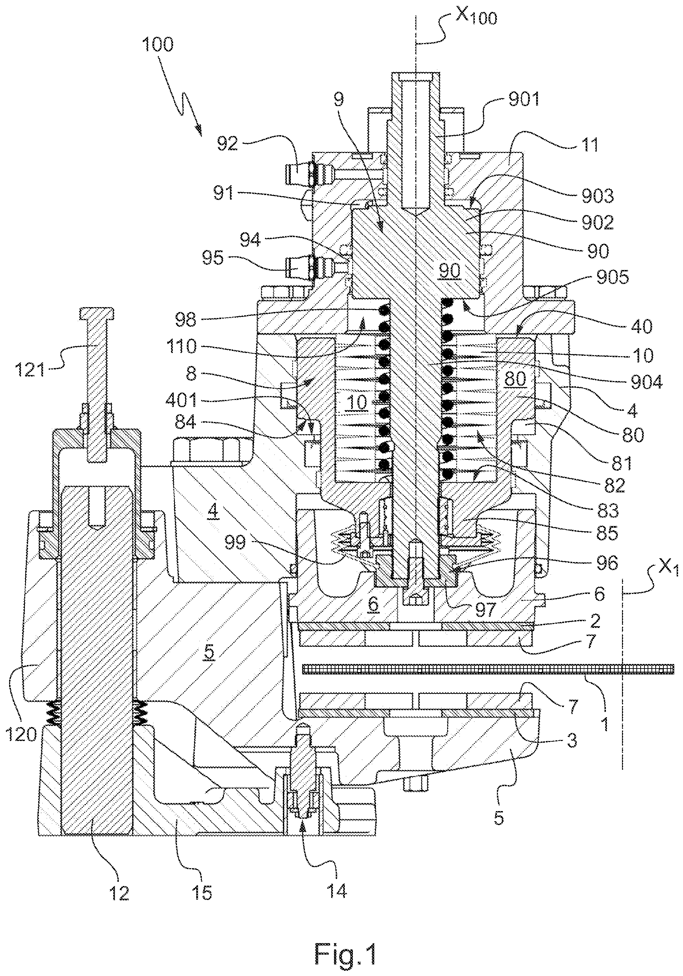

La figure 1 représente un frein hybride 100 selon l'invention, vu en coupe selon un plan axial (plan contenant l'axe central du corps du frein). Plus précisément, le plan axial en question est un plan de symétrie du frein.

Le frein hybride 100 est associé à un disque 1 d'un engin de levage (non représenté), lequel disque est solidaire d'une ligne rotative dudit engin de levage. Le frein hybride 100 comprend un plateau supérieur 2 muni de plaquettes de friction 7 (encore appelées garnitures d'usure) et un plateau inférieur 3, pareillement muni de plaquettes de friction 7. Les plateaux et le disque sont parallèles entre eux et orthogonaux à un axe central X₁₀₀ du frein, la référence X₁ désignant par ailleurs l'axe de rotation du disque 1 qui est parallèle à l'axe central X₁₀₀. Les termes « direction axiale » font référence à la direction de l'axe central X₁₀₀ du frein.

Le frein hybride 100 comprend de plus un corps rigide comprenant un demi-étrier supérieur 4, ci-après plus simplement appelé « demi-étrier », et un contre-étrier 5. Le demi-étrier 4 est tubulaire : il comprend un évidement central 40 traversant selon la direction axiale. Cet évidement central 40 n'est pas nécessairement cylindrique, il peut comprendre une succession de tronçons de diamètres distincts formant divers épaulements internes. En revanche, par soucis d'économie, ces différents tronçons présentent de préférence tous une section circulaire pour permettre la réalisation des étanchéités et des guidages par des joints classiques. D'autres sections (polygonales par exemple, notamment carrées) sont cependant possibles, sous réserve d'utiliser des joints spécifiques de forme complémentaire.

Le plateau 2 est porté par un sabot 6 monté coulissant à l'intérieur de l'évidement central 40 du demi-étrier (le plateau 2 pourrait, en variante, correspondre à la face inférieure dudit sabot 6), tandis que le plateau 3 est porté par le contre-étrier 5 (il est par exemple fixé sur la face supérieure de celui-ci).

Le frein hybride 100 comprend aussi un empilage de rondelles ressorts 10. Les rondelles ressorts sont choisies pour leur caractéristiques dimensionnelles/ matériau/ propriétés (raideur notamment), de même que les garnitures sont choisies pour leur coefficient de friction, en fonction notamment de la charge maximale que le frein est destiné à freiner. L'empilage de rondelles ressorts est ainsi dimensionné de façon à générer un effort de serrage, dit effort de serrage d'urgence, induisant (par l'intermédiaire des plaquettes et donc selon le coefficient de friction de celles-ci) un effort de freinage qui doit correspondre à l'effort de freinage nécessaire pour stopper instantanément ladite charge maximale.

Le frein hybride 100 comprend de plus à la fois un actionneur négatif 8 et un actionneur positif 9, qui forment respectivement, avec l'empilage de rondelles ressorts 10, un frein négatif (ou frein à manque) et un frein positif.

Le frein hybride 100 illustré est un frein coulissant : les deux actionneurs sont situés du même côté du disque 1 ; ils agissent tous les deux sur le plateau supérieur 2, et le frein est dépourvu d'actionneur de l'autre côté du disque. Le plateau supérieur 2 peut être approché ou écarté du disque sous l'effet des actionneurs, tandis que le plateau inférieur 3 reste immobile. Pour que les deux plateaux viennent exercer ensemble un effort de pincement sur le disque, il faut donc que le corps rigide du frein puisse se déplacer axialement. A cette fin, le frein comprend une colonne 12 sur laquelle le corps rigide du frein (demi-étrier 4 + contre-étrier 5) est monté coulissant selon la direction axiale, par l'intermédiaire d'une potence 120 qui, en l'exemple, prolonge le contre-étrier 5, la potence 120 et la colonne 12 formant par conséquent une liaison glissière. La colonne 12 est fixée sur une semelle 15. Le frein 100 comprend de plus une vis 121 permettant de bloquer le corps rigide sur la colonne 12 si nécessaire, notamment lors des opérations de maintenance.

En variante, le frein hybride pourrait être un frein symétrique. Il comprendrait alors quatre actionneurs, à savoir un actionneur positif et un actionneur négatif de chaque côté du disque. Le frein coulissant est préféré en ce qu'il présente des coûts de fabrication et de maintenance moindres, ainsi qu'une fiabilité accrue (moins d'actionneurs, donc moins de risques de panne ou de casse).

L'actionneur négatif 8 comprend un piston négatif 80 monté coulissant dans l'évidement central 40 du demi-étrier.

L'exemple illustré utilise un actionneur négatif 8 hydraulique. Une chambre 81 (dite chambre négative) est donc prévue, laquelle chambre négative 81 est délimitée par la face interne de l'évidement 40 et la face externe du piston négatif. Plus précisément, la chambre négative 81 est délimitée par un épaulement externe 84 du piston orienté vers le bas (c'est-à-dire en direction du disque 1) et un épaulement interne 401 du demi-étrier orienté vers le haut (c'est-à-dire en direction opposée au disque 1). Bien entendu, cette chambre négative 81 est reliée à un dispositif d'alimentation en fluide sous pression (non représenté) qui constitue la source d'énergie (dite première source d'énergie), hydraulique donc, prévue pour le fonctionnement de l'actionneur négatif 8.

En variante, l'actionneur négatif pourrait être électromécanique ou électromagnétique, l'homme du métier étant à même, sans faire preuve d'activité inventive, d'adapter la forme du demi-étrier et pour y intégrer par exemple les électro-aimants nécessaires au déplacement du piston négatif vers sa position haute lorsque les électro-aimants sont sous tension pour la réalisation d'un frein négatif électromagnétique.

Le piston négatif 80 présente une cavité supérieure 82 dans laquelle est logée une partie inférieure de l'empilage de rondelles ressorts 10. L'extrémité inférieure de l'empilage 10 repose ainsi sur un fond 83 de la cavité supérieure 82. L'extrémité supérieure de l'empilage de rondelles ressorts 10 vient par ailleurs en butée contre un élément fixe du corps rigide du frein, en l'occurrence ici la face inférieure d'un couvercle 11 fixé au sommet du demi-étrier 4.

La présence du couvercle facilite les opérations de maintenance en permettant un accès à l'intérieur du demi-étrier et surtout à l'empilage de rondelles ressorts 10 : si l'on souhaite changer une rondelle ressort cassée par exemple, il suffit de dévisser les vis qui traversent la bride inférieure du couvercle 11 et maintiennent celui-ci fixé au demi-étrier 4, puis de retirer le couvercle pour pouvoir accéder à l'empilage de rondelles ressorts 10 logé dans la cavité supérieure 82 du piston négatif. Ce couvercle permet aussi d'accéder facilement au piston positif 90, décrit en détail ci-après.

L'évidement central 40 du demi-étrier se prolonge axialement par un évidement central 110 traversant le couvercle 11 selon la direction axiale.

L'empilage de rondelles ressorts 10 étant coincé entre la face inférieure du couvercle 11 (qui est fixe) et le fond 83 de la cavité supérieure du piston négatif 80, l'effort de compression de l'empilage de rondelles ressorts 10 tend à déplacer le piston négatif 80 vers le bas, en direction du sabot 6.

Lorsque la chambre 81 de l'actionneur négatif est vide ou qu'une pression faible ou nulle est imposée sur le fluide que contient ladite chambre, le piston négatif 80 descend sous l'effet de la poussée de l'empilage de rondelles ressorts 10 ; l'extrémité inférieure 85 du piston négatif 80 vient appuyer, directement ou indirectement, sur une butée ou rotule 97 portée par l'extrémité inférieure du piston positif 90 ; la butée ou rotule 97 vient s'accoupler au sabot 6 et le piston négatif pousse le sabot 6 en direction du disque 1 au fur et à mesure que l'empilage de rondelles ressorts 10 se détend.

Lorsque les plaquettes de friction 7 du plateau 2 entrent en contact avec le disque 1, le corps rigide du frein coulisse d'un bloc vers le haut le long de la colonne 12 tandis que le piston négatif 80 continue de descendre relativement au demi-étrier, jusqu'à ce que le piston négatif 80 soit dans une position basse de frein fermé dans laquelle les plaquettes de friction des deux plateaux sont en contact avec le disque et exercent ensemble un effort de pincement sur le disque. L'effort de serrage, dit effort de serrage d'urgence, imposé alors sur le disque dépend de la compression résiduelle de l'empilage de rondelles ressorts 10 dans cette position basse du piston négatif, compression résiduelle qui peut être ajustée lors de la conception du frein en jouant sur le nombre, la raideur, le matériau et/ou les dimensions des rondelles utilisées. On peut ainsi obtenir un effort de serrage d'urgence souhaité.

Lorsque le piston négatif 80 est en position haute comme illustré à la Fig. 1, c'est-à-dire lorsque la chambre 81 est remplie avec une pression de fluide supérieure ou égale à une valeur seuil donnée, l'empilage de rondelles ressorts 10 est compressé au-delà de la compression de freinage d'urgence (qui correspond à la position basse du piston 80).

En cas de panne électrique ou si l'alimentation en fluide de la chambre 81 est volontairement stoppée, c'est-à-dire si la (première) source d'énergie de l'actionneur 8 est inactive (ou désactivée), la pression dans la chambre 81 chute brusquement et la chambre se vide ; le piston négatif 80 tombe en position basse et le frein est fermé en une fraction de seconde. L'actionneur 8 est donc bien un actionneur négatif.

L'actionneur positif 9, quant à lui, comprend un piston positif 90 monté coulissant dans les évidements centraux 40 et 110 du demi-étrier et du couvercle.

Dans l'exemple illustré, l'actionneur positif 9 est lui aussi hydraulique. Il comprend donc une chambre 91 (dite chambre positive) prévue au-dessus d'une face du piston positif 90 orientée vers le haut (direction opposée au disque), laquelle chambre est alimentée en fluide via un conduit d'alimentation 92. Ce fluide constitue une seconde source d'énergie, qui permet le fonctionnement de l'actionneur positif 9.

Le piston positif 90 comprend, du haut vers le bas, un premier tronçon 901 de plus petit diamètre puis un deuxième tronçon 902 de plus grand diamètre, de sorte qu'un épaulement externe 903 orienté vers le haut (c'est-à-dire en direction opposée au disque 1) est formé entre les premier et deuxième tronçons du piston.

La chambre positive 91 de l'actionneur positif est délimitée par la face externe du piston positif 90 et par la face interne de l'évidement 110 du couvercle 11 au-dessus de cet épaulement externe 903. En d'autres termes, la chambre positive est formée à l'intérieur du couvercle 11, en dehors du demi-étrier 4. On constate que l'ensemble de l'actionneur positif 9 (piston 90, chambre 91, conduit et vanne 92 d'alimentation en fluide de la chambre, ressort de rappel 98) est accessible sur simple ouverture du couvercle 11. Ceci facilite les opérations de maintenance (contrôle et réparation d'éventuelles fuites par exemple) de l'actionneur positif, qui est celui qui est le plus utilisé et donc le plus susceptible de s'user. De même, l'empilement de rondelles ressorts 10 (lesquelles rondelles sont des pièces susceptibles de se casser) est accessible une fois le couvercle 11 et le piston 90 retirés. Ainsi, les principales pannes du frein hybride peuvent être réglées sur place, sans qu'il soit nécessaire de déposer le frein.

Le diamètre externe du deuxième tronçon 902 du piston positif est sensiblement équivalent (à un jeu près, réduit au minimum) au diamètre interne d'un tronçon correspondant de l'évidement central 110 du couvercle, pour permettre le coulissement du piston 90 selon l'axe central X₁₀₀ tout en évitant les fuites de fluide pouvant survenir depuis la chambre 91 entre la face externe du piston et la face interne de l'évidement 110 du couvercle. Un joint peut être prévu pour limiter ces fuites, ainsi qu'une rainure 94 et un conduit 95 pour la récupération des éventuelles fuites en aval (c'est-à-dire en dessous) du joint.

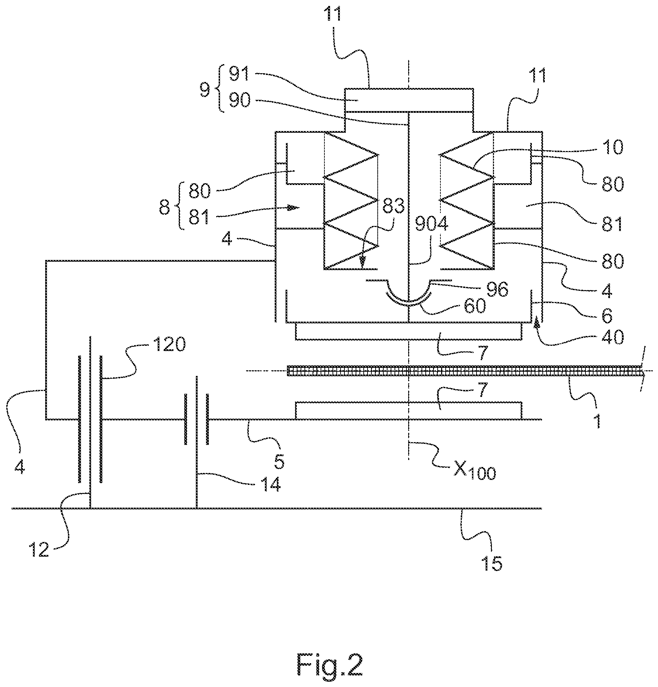

Le piston positif 90 comprend ensuite un troisième tronçon formant un arbre 904 qui traverse l'empilage de rondelles ressorts 10 (l'arbre 904 passe à travers le trou central de chacune des rondelles ressorts) ; l'arbre 904 traverse aussi l'extrémité inférieure 85 du piston négatif 80. Comme cela a déjà été évoqué plus haut, l'extrémité inférieure de l'arbre 904 du piston positif est pourvue d'une butée (fig. 1) ou d'une rotule (fig. 2), référencée 97 dans les deux cas, qui vient s'encastrer dans une niche correspondante 60 du sabot 6 lorsque le piston positif 90 est déplacé vers le bas en direction du disque 1. A noter que l'extrémité inférieure 96 du piston peut être dépourvue de rotule ou butée et être configurée pour venir directement s'accoupler au sabot 6.

Un soufflet 99, fixé d'une part à la face externe de la portion inférieure 85 du piston négatif et d'autre part à l'extrémité inférieure 96 du piston positif (par exemple à la butée ou rotule 97), est avantageusement prévu pour empêcher l'entrée de poussières et particules de garniture pouvant perturber le système de rattrapage d'usure.

Le frein hybride 100 est de plus associé à un contrôleur (non représenté) qui permet de commander les actionneurs positif 9 et négatif 8, en agissant sur l'alimentation en énergie de ces actionneurs.

Lorsqu'un freinage dynamique de service ou un freinage statique de parking est nécessaire, le contrôleur commande l'injection de fluide sous pression dans la chambre positive 91 (activation de la seconde source d'énergie) de l'actionneur positif 9, ce qui provoque le déplacement du piston positif 90 vers le bas, jusqu'à ce que la butée ou rotule 97 à l'extrémité inférieure de l'arbre 904 s'accouple avec le sabot 6 puis pousse ce dernier vers le disque 1. Lorsque les plaquettes de friction 7 du plateau 2 entrent en contact avec le disque 1, le corps rigide du frein coulisse d'un bloc vers le haut le long de la colonne 12 tandis que le piston positif 90 continue de descendre relativement au demi-étrier, jusqu'à ce que les plaquettes de friction des deux plateaux soient en contact avec le disque et exercent ensemble un effort de pincement sur le disque. L'effort de serrage imposé alors sur le disque 1 est fonction de la pression de fluide régnant dans la chambre positive 91. Le frein positif peut donc être commandé de façon à exercer un effort de serrage contrôlé variable.

Pendant ce temps, le frein négatif 8 est maintenu ouvert tel qu'illustré à la figure 1, c'est-à-dire qu'une pression de fluide au moins égale à une pression seuil prédéterminée (apte à compenser la compression de freinage d'urgence de l'empilage 10) est maintenue dans la chambre négative 81 afin que le piston négatif 80 reste en position haute comme illustré à la figure 1.

Selon l'invention, le frein 100 comprend un ressort de rappel 98 configuré pour remonter le piston positif 90 dans sa position haute de frein ouvert. Dans l'exemple illustré, le ressort de rappel 98 est logé autour de l'arbre 904 à l'intérieur de l'empilage de rondelles ressorts 10. Le ressort de rappel 98 prend appui d'une part sur le fond 83 de la cavité supérieure du piston négatif et d'autre part sur un épaulement externe 905 du piston positif, lequel épaulement 905 est situé à la jonction entre les tronçons 902 et 904 du piston (l'épaulement 905 est donc orienté vers le bas).

Le rappel du piston positif 90 par ce ressort 98 permet d'obtenir un débattement important du piston positif, qui rend le frein hybride selon l'invention adapté aux engins de levage pourvus d'un disque de grand diamètre.

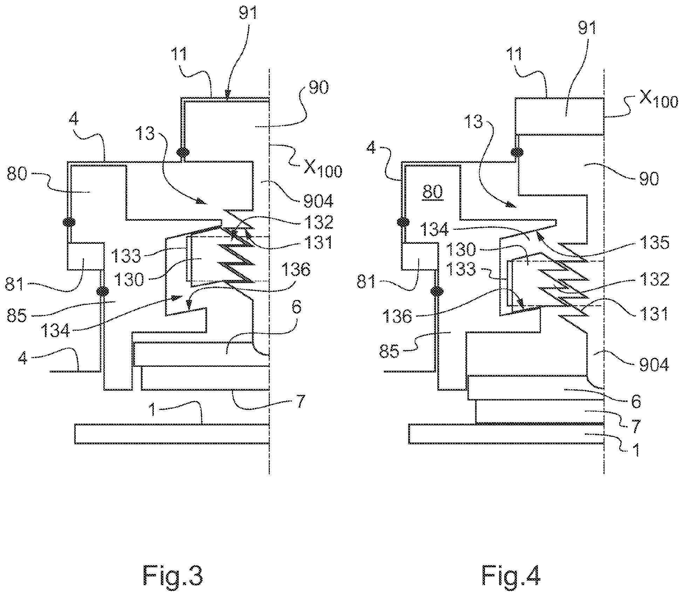

Le frein hybride 100 illustré comprend de plus un dispositif de rattrapage d'usure 13 agencé entre l'empilage de rondelles ressorts 10 et le sabot 6, et qui va maintenant être décrit en référence aux fig. 3 à 6, sur lesquelles seule une moitié des actionneurs positif et négatif du frein est représentée, de façon symbolique, l'autre moitié étant obtenue par symétrie par rapport à l'axe X₁₀₀.

Le dispositif de rattrapage d'usure 13 comprend :
- un filetage 131, dit filetage de rattrapage, ménagé sur une portion inférieure de l'arbre 904 du piston positif,
- une pluralité de coquilles 130, par exemple trois coquilles 130 agencées à 120° les unes des autres autour du filetage 131,
- un anneau élastique 133 entourant les coquilles et exerçant sur celles-ci des efforts radiaux centripètes qui maintiennent les coquilles au contact du filetage de rattrapage 131 ; chaque coquille 130 présente une face intérieure 132 (face orientée vers l'axe X₁₀₀) qui est taraudée avec un pas de vis complémentaire du pas de vis du filetage de rattrapage 131, de sorte que la face intérieure taraudée 132 des coquilles s'emboîte dans le filetage de rattrapage 131, sous la pression de l'anneau élastique 133.
- pour chaque coquille 130, un logement 134 recevant ladite coquille (le logement étant propre à ladite coquille ou commun à plusieurs coquilles), lequel logement 134 est ménagé dans le piston négatif 80 et est ouvert vers l'axe central X₁₀₀, le logement 134 ayant une dimension axiale supérieure à celle de la coquille de façon à ce que la coquille puisse se déplacer axialement dans le logement sur une course au moins égale au pas du filetage 131, le logement 134 ayant de plus une profondeur radiale suffisante pour que la coquille puisse se déplacer radialement sur une course permettant au taraudage 132 de sortir du filetage 131. A noter que le dispositif de rattrapage 13 peut comprendre une pluralité de logements 134 séparés, en particulier un logement par coquille 130, ou un unique logement circulaire qui fait le tour de l'arbre 904 (c'est-à-dire une rainure circulaire ménagée dans la face interne du piston négatif 80) et qui accueille toutes les coquilles 130, ou encore une pluralité de logements accueillant chacun plusieurs coquilles.

Sur les fig. 3 et 4, le frein dispose de plaquettes de friction 7 non usées. Sur la figure 3, le piston négatif 80 est en position haute de frein ouvert comme illustré sur la fig. 1 (la chambre négative 81 contient un fluide sous pression exerçant sur le piston 80 un effort supérieur à l'effort de compression de freinage d'urgence). Le piston positif 90 est aussi en position haute de frein ouvert (la chambre positive 91 est vide et l'épaulement 903 (voir fig. 1) du piston 90 est en contact ou à proximité du couvercle 11). Dans cette position, chaque coquille 130 est en appui contre la face supérieure 135 (ou butée supérieure) de son logement 134.

Lorsque l'actionneur positif 9 est actionné, par exemple pour une opération de service, le piston positif 90 est poussé vers le bas par le fluide sous pression injecté dans la chambre positive 91, et le piston positif 90 passe de sa position haute (fig.3) à sa position basse de frein fermé, illustrée sur la fig. 4. Pendant ce temps le piston négatif 80 est maintenu fixe, dans sa position haute de frein ouvert.

Lorsque le piston positif 90 est en position basse de frein fermé, les plaquettes de friction 7 sont au contact du disque 1. Lors de la descente du piston et donc du filetage 131, les coquilles ont suivi jusqu'à venir en appui contre la face inférieure (ou butée inférieure) 136 du logement. Le filetage peut éventuellement être descendu légèrement plus que les coquilles (c'est le cas sur la fig. 4), repoussant celles-ci radialement sans toutefois aller jusqu'à ce que le taraudage 132 des coquilles se désengage du filetage 131.

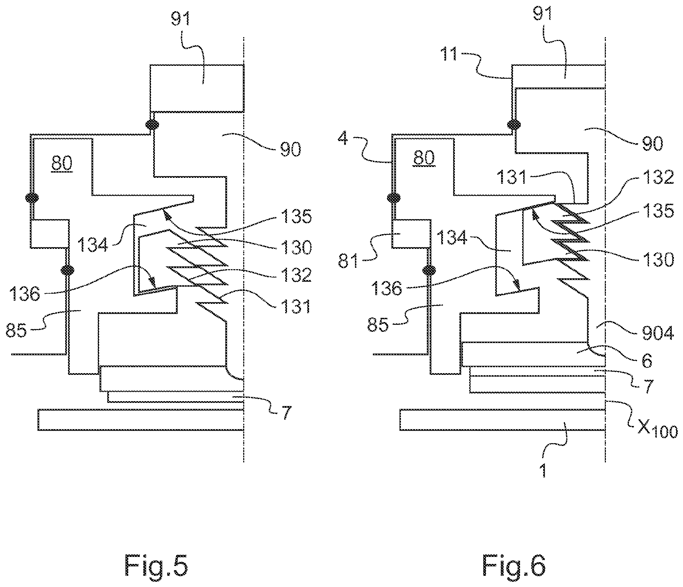

La figure 5 illustre le piston positif 90 en phase descendante mais dans le cas où les plaquettes de friction 7 sont usées. Dans ce cas, lorsque le piston positif 90 arrive à la hauteur de la fig. 4 (qui correspond à la position basse de frein fermé lorsque les plaquettes sont neuves), les plaquettes 7 (usées) sont encore à distance du disque 1 puisqu'elles présentent une épaisseur réduite en raison de leur usure, et le piston peut continuer à descendre, poussé par le fluide sous pression dans la chambre positive 91. Les coquilles 130 ne peuvent plus descendre, retenues par la face inférieure 136 (ou butée inférieure) du logement. Elles sont alors contraintes de se déplacer radialement poussées par le filetage 131 jusqu'à ce que leur taraudage 132 se désengage du filetage 131.

A noter que les filets du filetage de rattrapage 131 et du taraudage 132 des coquilles de rattrapage ont avantageusement une section triangulaire avec une face supérieure orthogonale à l'axe central X₁₀₀ et une face inférieure inclinée. Ainsi, lorsque le piston positif 90 descend, le filetage de rattrapage exerce sur les coquilles de rattrapage 130 un effort qui comprend à la fois une composante axiale qui entraine les coquilles vers le bas et une composante radiale qui tend à déplacer radialement les coquilles vers l'extérieur lorsque celles-ci sont arrivées en butée contre la face inférieure 136 du logement. A l'inverse, lorsque le piston positif 90 remonte, le filetage de rattrapage 131 exerce sur chaque coquille 130 un effort purement axial qui garantit que le taraudage 132 des coquilles reste engagé dans le filetage de rattrapage 131 de l'arbre, y compris lorsque les coquilles arrivent en butée contre la face supérieure 135 du logement.

Arrivé à la situation de la fig. 5, le piston 90 continue à descendre et les coquilles sautent un pas du filetage 131, ou éventuellement plusieurs pas, pour se retrouver dans la position illustrée à la fig. 6. Lorsque la source d'énergie du frein positif est ensuite désactivée ou réduite, le piston 90 remonte jusqu'à ce que les coquilles viennent en butée contre la face supérieure (ou butée supérieure) 135 du logement et stoppent ainsi le piston 90 dans une nouvelle position haute de frein ouvert (fig. 6). Cette nouvelle position haute de frein ouvert est décalée d'un ou plusieurs pas de filetage 131 par rapport à la position haute précédente, le décalage correspondant à l'épaisseur perdue par usure par les plaquettes de friction 7. Ainsi, avec la même course, l'actionnement du piston positif 90 permet toujours de fermer le frein, que les plaquettes soient usées ou non.

Le rattrapage sert aussi au frein négatif, puisque lorsque le frein positif n'est pas utilisé et que le piston négatif 80 est en position haute de frein ouvert (voir fig. 3 et fig. 5), les coquilles sont toujours en appui sur la face supérieure 135 du logement 134 du piston négatif. Or dans l'exemple décrit, le piston négatif 80 agit (c'est-à-dire vient indirectement en appui) sur le sabot 6 par l'intermédiaire du dispositif de rattrapage 13, plus précisément par l'intermédiaire des coquilles 130, du filetage de rattrapage 131 et de l'extrémité inférieure 96 de l'arbre 904. Ainsi lorsque le piston négatif 80 est en position haute de frein ouvert, l'extrémité inférieure du piston négatif est déjà en « contact » indirect avec le sabot via les coquilles 130 et l'arbre 904 du piston positif. Lorsque le frein d'urgence est déclenché, le piston négatif 80 pousse donc immédiatement le sabot 6 en direction du disque. La position relative des coquilles 130 et du filetage 131 prenant en compte l'épaisseur des plaquettes de friction 7 et leur éventuelle usure, la fermeture du frein (avec un couple de freinage d'urgence prédéterminé) est garantie avec la même course du piston négatif 80, que les plaquettes soient usées ou non.

La présence d'un frein positif dans le frein hybride ne perturbe en rien la fonction de freinage d'urgence. Le piston négatif 80 peut être actionné (descendu) quelle que soit la position du piston positif 90. Si le piston positif 90 est en position haute de frein ouvert, comme précédemment décrit, le piston négatif 80 entraîne les coquilles 130 et le sabot 6 dès le début de sa course. Si le frein positif est en cours d'utilisation et que le piston positif 90 est par exemple en position basse de frein fermé, le piston négatif 80 n'appuiera sur les coquilles 130 et le sabot 6 qu'en fin de course, pour garantir que le couple imposé au disque soit au moins égal au couple de freinage d'urgence. Si le frein positif est en cours d'utilisation et que le piston positif 90 est dans une position intermédiaire (en phase de descente ou de montée), le piston négatif 80 prendra le relais en un point intermédiaire de sa propre course lorsque la face supérieure 135 des logements 134 entrera en contact avec les coquilles 130. A noter que, même s'il est en phase de remontée, le piston positif 90 n'oppose pas de résistance à l'encontre de la descente du piston négatif d'urgence puisque la remontée du piston positif s'effectue à énergie négative (la chambre 91 se vide) et que le ressort de rappel 98 qui pousse le piston positif vers le haut s'appuie sur le piston négatif 80 (le ressort 98 exerce donc sur le piston négatif 80 un effort vers le bas qui compense l'effort exercé vers le haut sur le piston négatif 80 par le piston positif 90 via les coquilles du dispositif de rattrapage).

Le frein hybride 100 comprend enfin de préférence aussi un dispositif de recentrage 14 qui permet de recentrer le corps du frein par rapport au disque afin de garantir une ouverture symétrique par rapport au disque sur toute la plage d'usure des plaquettes de friction 7 (les plaquettes du plateau 2 pouvant être plus ou moins usées que celles du plateau 3. Ce dispositif ne sera pas décrit en détail ici.

## Revendications

1. Frein hybride pour engin de levage, destiné à coopérer avec un disque de l'engin de levage s'étendant dans un plan orthogonal à une direction axiale, le frein hybride comprenant :
- deux plateaux (2, 3) s'étendant parallèlement au disque de part et d'autre de celui-ci, les deux plateaux formant une pince pouvant être actionnée entre une position de frein ouvert dans laquelle les plateaux sont à distance du disque et une position de frein fermé dans laquelle les plateaux pincent le disque,
- un corps rigide (4, 5) comprenant une partie supérieure tubulaire (4), dite demi-étrier supérieur, située d'un côté du disque, l'un des plateaux (2), dit plateau supérieur, étant porté par un sabot (6) monté coulissant selon la direction axiale dans un évidement central traversant (40) du demi-étrier supérieur,
- un empilage de rondelles ressorts (10) agencé dans l'évidement central (40) du demi-étrier supérieur autour d'un axe central (X₁₀₀) parallèle à la direction axiale, l'empilage de rondelles ressorts (10) étant configuré pour pouvoir être comprimé au-delà d'un niveau, dit compression de freinage d'urgence, dans lequel ledit empilage exerce une force sur le sabot (6) correspondant à un effort de serrage d'urgence souhaité sur le disque,
- un actionneur négatif (8), comprenant un piston négatif (80) mû par une première source d'énergie, lequel piston négatif présente une face (83) sur laquelle repose une extrémité inférieure de l'empilage de rondelles ressorts (10), le piston négatif (80) étant monté coulissant selon la direction axiale dans l'évidement central (40) du demi-étrier supérieur entre une position haute de frein ouvert dans laquelle le piston négatif (80) comprime l'empilage de rondelles ressorts (10) au-delà de la compression de freinage d'urgence, et une position basse de frein fermé dans laquelle le frein est fermé et dans laquelle le piston négatif (80) maintient l'empilage de rondelles ressorts (10) à la compression de freinage d'urgence d'un côté et est en appui direct ou indirect sur le sabot (6) d'un autre côté, le piston négatif étant placé dans sa position haute de frein ouvert lorsque la première source d'énergie est activée et dans sa position basse de frein fermé lorsque ladite première source d'énergie est inactive,
- un actionneur positif (9) comprenant un piston positif (90) mû par une seconde source d'énergie, , le piston positif étant monté coulissant selon la direction axiale entre une position haute de frein ouvert dans laquelle le frein est ouvert, et une position basse de frein fermé dans laquelle le frein est fermé, le piston positif étant placé dans sa position haute de frein ouvert lorsque la seconde source d'énergie est inactive et pouvant être placé dans sa position basse de frein fermé lorsque la seconde source d'énergie est activée,
le frein hybride étant **caractérisé en ce qu'**il comprend un ressort de rappel (98) du piston positif, configuré pour remonter le piston positif (90) dans sa position haute de frein ouvert.

2. Frein hybride selon la revendication 1, **caractérisé en ce que** :
- le piston négatif (80) comprend une cavité supérieure (82) cylindrique recevant une partie inférieure de l'empilage de rondelles ressorts (10), le piston négatif comprenant par ailleurs une extrémité inférieure (85) configurée pour s'appuyer directement ou indirectement sur le sabot (6) lorsque le piston négatif est en position basse de frein fermé,
- le piston positif (90) comprend un arbre (904) s'étendant selon l'axe central (X₁₀₀) à travers l'empilage de rondelles ressorts (10), lequel arbre présente une extrémité inférieure configurée pour s'accoupler au sabot (6) et une extrémité supérieure qui fait saillie hors du demi-étrier supérieur (4) quelle que soit la position du piston positif.

3. Frein hybride selon l'une des revendications 1 ou 2, **caractérisé en ce que** la première source d'énergie est hydraulique, le piston négatif (80) présentant un épaulement externe (84) qui est orienté vers le disque (1) et qui délimite, dans l'évidement central (40) du demi-étrier, une chambre hydraulique (81) dite chambre négative.

4. Frein hybride selon l'une des revendications 1 ou 2, **caractérisé en ce que** la première source d'énergie est électromagnétique ou électromécanique.

5. Frein hybride selon l'une des revendications 1 à 4, **caractérisé en ce que** la seconde source d'énergie est hydraulique ou électromécanique ou électromagnétique.

6. Frein hybride selon l'une des revendications 1 à 5, **caractérisé en ce que** chaque plateau (2, 3) est muni d'une ou plusieurs plaquettes de friction (7) et **en ce que** le frein comprend un dispositif de rattrapage d'usure (13) entre l'empilage de rondelles ressorts (10) et le sabot (6) pour compenser l'usure des plaquettes de friction.

7. Frein hybride selon la revendication 6 et selon la revendication 2, **caractérisé en ce que** le dispositif de rattrapage d'usure (13) comprend :
- un filetage (131), dit filetage de rattrapage, ménagé sur l'arbre (904) de l'actionneur positif entre l'extrémité inférieure de l'empilage de rondelles ressorts (10) et l'extrémité inférieure (96) de l'arbre,
- des coquilles (130), dites coquilles de rattrapage, agencées autour du filetage de rattrapage (131), chaque coquille de rattrapage (130) présentant une face taraudée (132) complémentaire du filetage de rattrapage (131),
- pour chaque coquille de rattrapage (130), un logement (134) ménagé dans le piston négatif (80) et dans lequel est logée ladite coquille, le logement (134) ayant une dimension axiale supérieure à un encombrement axial de la coquille de rattrapage augmenté d'au moins un pas de filetage de rattrapage de sorte que la coquille de rattrapage (130) peut se déplacer axialement dans ce logement sur une distance axiale d'au moins un pas de filetage, le logement ayant aussi radialement une profondeur suffisante pour que la coquille puisse se déplacer radialement sur une distance radiale correspondant au moins à une profondeur du pas de filetage de rattrapage,
- un anneau élastique (133) entourant les coquilles en exerçant sur elles une pression radiale centripète tendant à maintenir les coquilles de rattrapage (130) plaquées contre le filetage de rattrapage (131).

8. Frein hybride selon la revendication 7, **caractérisé en ce que** le dispositif de rattrapage d'usure comprend de plus un actionneur configuré pour entraîner le piston positif (90) en rotation et des moyens de pilotage dudit actionneur.

9. Frein hybride selon l'une des revendications 1 à 8, **caractérisé en ce que** :
- outre le demi-étrier supérieur (4), le corps rigide du frein comprend une partie inférieure (5), dite contre-étrier, située de l'autre côté du disque (1), l'autre plateau (3), dit plateau inférieur, étant situé sur ce contre-étrier (5) et étant fixe par rapport à celui-ci,
- le frein est dépourvu d'actionneur pour le freinage du côté du contre-étrier (5) ;
- le frein comprend une colonne (12) sur laquelle le corps rigide (4, 5) est monté coulissant selon la direction axiale.

10. Système de freinage pour engin de levage, comprenant un frein hybride selon l'une des revendications 1 à 9 et un contrôleur à microprocesseur(s) auquel sont reliés l'actionneur positif (9) et l'actionneur négatif (8) dudit frein hybride, le contrôleur étant configuré pour utiliser l'actionneur positif pour tout freinage dynamique de service et pour tout maintien statique lorsque l'engin de levage est en service, sous tension et en absence de défaut, et pour utiliser l'actionneur négatif pour tout freinage dynamique d'urgence en cas de défaut et pour tout maintien statique lorsque l'engin de levage est mis hors service.

11. Engin de levage **caractérisé en ce qu'**il est équipé d'un frein hybride selon l'une des revendications 1 à 9.

## Patentansprüche

1. Hybridbremse für ein Hebezeug, die dazu bestimmt ist, mit einer Scheibe des Hebezeugs zusammenzuwirken, die sich orthogonal zu einer axialen Richtung erstreckt, wobei die Hybridbremse Folgendes umfasst:
- zwei Platten (2, 3), die sich parallel zu der Scheibe auf beiden Seiten derselben erstrecken, wobei die beiden Platten eine Klemme bilden, die zwischen einer Position bei geöffneter Bremse, in der die Platten von der Scheibe entfernt sind, und einer Position bei geschlossener Bremse, in der die Platten die Scheibe einklemmen, betätigt werden kann,
- einen starren Körper (4, 5), der einen rohrförmigen oberen Teil (4), den sogenannten oberen Halbbügel, umfasst, der sich auf einer Seite der Scheibe befindet, wobei eine der Platten (2), die sogenannte obere Platte, von einem in axialer Richtung verschiebbaren, in einer durchgehenden zentralen Aussparung (40) des oberen Halbbügels montierten Bremsschuh (6) getragen wird,
- ein Tellerfederpaket (10), das in der zentralen Aussparung (40) des oberen Halbbügels um eine zentrale Achse (X₁₀₀) parallel zu der axialen Richtung angeordnet ist, wobei das Tellerfederpaket (10) so konfiguriert ist, dass es über eine Ebene hinaus komprimiert werden kann, die als Notbremskompression bezeichnet wird, wobei das Paket eine Kraft auf den Bremsschuh (6) ausübt, die einer gewünschten Notspannkraft auf die Scheibe entspricht,
- einen negativen Aktuator (8), der einen von einer ersten Energiequelle angetriebenen negativen Kolben (80) umfasst, wobei der negative Kolben eine Fläche (83) aufweist, auf der ein unteres Ende des Tellerfederpakets (10) aufliegt, wobei der negative Kolben (80) in axialer Richtung in der mittleren Aussparung (40) des oberen Halbbügels zwischen einer oberen Position bei geöffneter Bremse, in der der negative Kolben (80) das Tellerfederpaket (10) über die Kompression der Notbremsung hinaus zusammendrückt, und einer unteren Position bei geschlossener Bremse montiert ist, in der die Bremse geschlossen ist und in der der negative Kolben (80) das Tellerfederpaket (10) bei der Kompression der Notbremsung auf der einen Seite hält und auf der anderen Seite direkt oder indirekt auf dem Bremsschuh (6) aufliegt, wobei der negative Kolben in seiner oberen Position bei geöffneter Bremse angeordnet ist, wenn die erste Energiequelle aktiviert ist, und in seiner unteren Position bei geschlossener Bremse, wenn die erste Energiequelle inaktiv ist,
- einen positiven Aktuator (9), der einen positiven Kolben (90) umfasst, der von einer zweiten Energiequelle angetrieben wird, wobei der positive Kolben in axialer Richtung zwischen einer oberen Position bei geöffneter Bremse, in der die Bremse geöffnet ist, und einer unteren Position bei geschlossener Bremse, in der die Bremse geschlossen ist, verschiebbar montiert ist, wobei der positive Kolben in seiner oberen Position bei geöffneter Bremse angeordnet ist, wenn die zweite Energiequelle inaktiv ist, und in seiner unteren Position bei geschlossener Bremse, wenn die zweite Energiequelle aktiviert ist,
wobei die Hybridbremse **dadurch gekennzeichnet ist, dass** sie eine Rückstellfeder (98) des positiven Kolbens umfasst, die so konfiguriert ist, dass sie den positiven Kolben (90) in seine obere Position bei geöffneter Bremse zurückbewegt.

2. Hybridbremse nach Anspruch 1, **dadurch gekennzeichnet, dass**:
- der negative Kolben (80) einen zylindrischen oberen Hohlraum (82) umfasst, der einen unteren Teil des Tellerfederpakets (10) aufnimmt, wobei der negative Kolben ferner ein unteres Ende (85) umfasst, das so konfiguriert ist, dass es direkt oder indirekt auf dem Bremsschuh (6) aufliegt, wenn sich der negative Kolben in der unteren Position bei geschlossener Bremse befindet,
- der positive Kolben (90) eine Welle (904) umfasst, die sich entlang der Mittelachse (X₁₀₀) durch das Tellerfederpaket (10) erstreckt, wobei diese Welle ein unteres Ende aufweist, das so konfiguriert ist, dass es mit dem Bremsschuh (6) gekoppelt ist, und ein oberes Ende, das unabhängig von der Position des positiven Kolbens aus dem oberen Halbbügel (4) herausragt.

3. Hybridbremse nach einem der Ansprüche 1 oder 2, **dadurch gekennzeichnet, dass** die erste Energiequelle hydraulisch ist, wobei der negative Kolben (80) eine äußere Schulter (84) aufweist, die zu der Scheibe (1) hin ausgerichtet ist und in der mittleren Aussparung (40) des Halbbügels eine Hydraulikkammer (81), eine sogenannte Negativkammer, begrenzt.

4. Hybridbremse nach einem der Ansprüche 1 oder 2, **dadurch gekennzeichnet, dass** die erste Energiequelle elektromagnetisch oder elektromechanisch ist.

5. Hybridbremse nach einem der Ansprüche 1 bis 4, **dadurch gekennzeichnet, dass** die zweite Energiequelle hydraulisch oder elektromechanisch oder elektromagnetisch ist.

6. Hybridbremse nach einem der Ansprüche 1 bis 5, **dadurch gekennzeichnet, dass** jede Platte (2, 3) mit einem oder mehreren Reibbelägen (7) versehen ist und dass die Bremse eine Verschleißnachstellvorrichtung (13) zwischen dem Tellerfederpaket (10) und dem Bremsschuh (6) zum Ausgleich des Verschleißes der Reibbeläge umfasst.

7. Hybridbremse nach Anspruch 6 und nach Anspruch 2, **dadurch gekennzeichnet, dass** die Verschleißnachstellvorrichtung (13) Folgendes umfasst:
- ein Gewinde (131), das sogenannte Nachstellgewinde, das an der Welle (904) des positiven Aktuators zwischen dem unteren Ende des Tellerfederpakets (10) und dem unteren Ende (96) der Welle vorgesehen ist,
- Schalen (130), sogenannte Nachstellschalen, die um das Nachstellgewinde (131) angeordnet sind, wobei jede Nachstellschale (130) eine Gewindeseite (132) aufweist, die das Nachstellgewinde (131) ergänzt,
- für jede Nachstellschale (130) eine Aufnahme (134), die in dem negativen Kolben (80) vorgesehen ist und in der die Schale untergebracht ist, wobei die Aufnahme (134) eine axiale Abmessung aufweist, die größer ist als ein axialer Platzbedarf der Nachstellschale, der um mindestens einen Gewindegang erhöht ist, so dass die Nachstellschale (130) sich in dieser Aufnahme axial über einen axialen Abstand von mindestens einem Gewindegang bewegen kann, die Aufnahme auch radial eine ausreichende Tiefe aufweist, damit sich die Schale radial um einen radialen Abstand bewegen kann, der mindestens einer Tiefe der Nachstellgewindesteigung entspricht,
- einen elastischen Ring (133), der die Schalen umgibt, indem er auf sie einen radialen Zentripetaldruck ausübt, der dazu dient, die Nachstellschalen (130) gegen das Nachstellgewinde (131) gedrückt zu halten.

8. Hybridbremse nach Anspruch 7, **dadurch gekennzeichnet, dass** die Verschleißnachstellvorrichtung ferner einen Aktuator, der so konfiguriert ist, dass er den positiven Kolben (90) in Drehung antreibt, und Mittel zur Steuerung des Aktuators umfasst.

9. Hybridbremse nach einem der Ansprüche 1 bis 8, **dadurch gekennzeichnet, dass**:
- neben dem oberen Halbbügel (4) der starre Körper der Bremse einen unteren Teil (5), den sogenannten Gegenbügel, umfasst, der sich auf der anderen Seite der Scheibe (1) befindet, wobei die andere Platte (3), die sogenannte untere Platte, sich auf diesem Gegenbügel (5) befindet und in Bezug darauf feststehend ist,
- die Bremse über keinen Aktuator für die Bremsung auf der Seite des Gegenbügels (5) verfügt;
- die Bremse eine Säule (12) umfasst, an der der starre Körper (4, 5) in axialer Richtung verschiebbar montiert ist.

10. Bremssystem für ein Hebezeug, umfassend eine Hybridbremse nach einem der Ansprüche 1 bis 9 und eine Mikroprozessorsteuerung, mit der der positive Aktuator (9) und der negative Aktuator (8) der Hybridbremse verbunden sind, wobei die Steuerung so konfiguriert ist, dass sie den positiven Aktuator für jede dynamische Betriebsbremsung und für jede statische Aufrechterhaltung verwendet, wenn das Hebezeug in Betrieb, unter Spannung und ohne Fehler ist, und den negativen Aktuator für jede dynamische Notbremsung im Fehlerfall und für jedes statische Halten verwendet, wenn das Hebezeug außer Betrieb ist.

11. Hebezeug, **dadurch gekennzeichnet, dass** es mit einer Hybridbremse nach einem der Ansprüche 1 bis 9 ausgestattet ist.

## Claims

1. A hybrid brake for lifting machinery, intended to cooperate with a disc of the lifting machinery extending in an orthogonal plane to an axial direction, the hybrid brake comprising:
- two plates (2, 3) extending parallel to the disc on either side thereof, the two plates forming a clamp that can be actuated between an open brake position in which the plates are at a distance from the disc and a closed brake position in which the plates clamp the disc,
- a rigid body (4, 5) comprising a tubular upper part (4), referred to as an upper half-bracket, located on one side of the disc, one of the plates (2), referred to as the upper plate, being supported by a shoe (6) mounted so as to slide in the axial direction in a central through-recess (40) in the upper half-bracket,
- a spring washer stack (10) arranged in the central recess (40) of the upper half-bracket about a central axis (X₁₀₀) parallel to the axial direction, the spring washer stack (10) being configured so that it can be compressed beyond a certain level, referred to as the emergency braking compression, at which point the stack exerts a force on the shoe (6) corresponding to a desired emergency clamping force on the disc,
- a negative actuator (8), comprising a negative piston (80) moved by a first energy source, which negative piston has a face (83) on which a lower end of the spring washer stack (10) rests, the negative piston (80) being mounted so as to slide in the axial direction in the central recess (40) of the upper half-bracket between an upper open brake position, in which the negative piston (80) compresses the spring washer stack (10) beyond the emergency braking compression, and a lower closed brake position, in which the brake is closed and in which the negative piston (80) holds the washer spring stack (10) at the emergency braking compression on one side and is in direct or indirect contact with the shoe (6) on the other side, the negative piston being placed in its upper open brake position when the first energy source is activated and in its lower closed brake position when said first energy source is inactive,
- a positive actuator (9) comprising a positive piston (90) moved by a second energy source, the positive piston being mounted so as to slide in the axial direction between an upper open brake position, in which the brake is open, and a lower closed brake position, in which the brake is closed, the positive piston being placed in its upper open brake position when the second energy source is inactive and being able to be placed in its lower closed brake position when the second energy source is activated,
the hybrid brake being **characterised in that** it comprises a return spring (98) of the positive piston, configured to raise the positive piston (90) into its upper open brake position.

2. Hybrid brake according to claim 1, **characterised in that**:
- the negative piston (80) comprises a cylindrical upper cavity (82) receiving a lower part of the spring washer stack (10), the negative piston further comprising a lower end (85) configured to bear directly or indirectly on the shoe (6) when the negative piston is in the lower closed brake position,
- the positive piston (90) comprises a shaft (904) extending along the central axis (X₁₀₀) through the spring washer stack (10), which shaft has a lower end configured to couple to the shoe (6) and an upper end that projects out of the upper half-bracket (4) regardless of the position of the positive piston.

3. Hybrid brake according to any one of claims 1 or 2, **characterised in that** the first energy source is hydraulic, the negative piston (80) having an external shoulder (84) which is oriented towards the disc (1) and which delimits, in the central recess (40) of the half-bracket, a hydraulic chamber (81) referred to as the negative chamber.

4. Hybrid brake according to either claim 1 or 2, **characterised in that** the first energy source is electromagnetic or electromechanical.

5. Hybrid brake according to any one of claims 1 to 4, **characterised in that** the second energy source is hydraulic or electromechanical or electromagnetic.

6. Hybrid brake according to any one of claims 1 to 5, **characterised in that** each plate (2, 3) is provided with one or more friction pads (7) and **in that** the brake comprises a wear take-up device (13) between the spring washer stack (10) and the shoe (6) in order to compensate for the wear of the friction pads.

7. Hybrid brake according to claim 6 and according to claim 2, **characterised in that** the wear take-up device (13) comprises:
- a thread (131), referred to as the take-up thread, provided on the shaft (904) of the positive actuator between the lower end of the spring washer stack (10) and the lower end (96) of the shaft,
- shells (130), referred to as the take-up shells, arranged around the take-up thread (131), each take-up shell (130) having an internally threaded face (132) complementary to the take-up thread (131),
- for each take-up shell (130), a housing (134) which is provided in the negative piston (80) and in which said shell is housed, the housing (134) having an axial dimension greater than an axial footprint of the take-up shell increased by at least one take-up thread pitch so that the take-up shell (130) can move axially in this housing over an axial distance of at least one thread pitch, the housing also having radially a depth sufficient for the shell to be able to move radially over a radial distance corresponding to at least one depth of the take-up thread pitch,
- a resilient ring (133) surrounding the shells, exerting a radial centripetal pressure on them tending to keep the take-up shells (130) pressed against the take-up thread (131).

8. Hybrid brake according to claim 7, **characterised in that** the wear take-up device further comprises an actuator configured to drive the positive piston (90) in rotation and means for controlling said actuator.

9. Hybrid brake according to any one of claims 1 to 8, **characterised in that**:
- in addition to the upper half-bracket (4), the rigid body of the brake comprises a lower part (5), referred to as the counter-bracket, located on the other side of the disc (1), the other plate (3), referred to as the lower plate, being located on this counter-bracket (5) and being fixed with respect thereto,
- the brake has no actuator for braking on the side of the counter-bracket (5);
- the brake comprises a column (12) on which the rigid body (4, 5) is mounted so as to slide in the axial direction.

10. A braking system for lifting machinery, comprising a hybrid brake according to any one of claims 1 to 9 and a microprocessor controller to which the positive actuator (9) and the negative actuator (8) of said hybrid brake are connected, the controller being configured to use the positive actuator for any dynamic service braking and for any static holding when the lifting machinery is in service, powered on and in the absence of a failing, and to use the negative actuator for any dynamic emergency braking in the event of a failing and for any static holding when the lifting machinery is taken out of service.

11. Lifting machinery, **characterised in that** it is equipped with a hybrid brake according to any one of claims 1 to 9.
